# EUROPEAN PATENT APPLICATION

(11) **EP 4 818 463 A1**
(43) Date of publication of application: **07.10.2026**
(21) Application number: 25168382.7
(22) Date of filing: 03.04.2025
(51) Int. Cl.: E21B 21/06, G01F 22/00

(54) **IMPROVED VOLUME MEASUREMENT METHOD AND SYSTEM**

(71) Applicant: Robovision, 2018 Antwerpen (BE)
(72) Inventor: De Meyer, Sam, 2018 Antwerpen (BE); Den Dooven, Raphael, 2018 Antwerpen (BE); Waegeman, Tim, 2018 Antwerpen (BE)
(74) Representative: Patentales BV

(57) **Abstract**

The present invention concerns a method for measuring the volume output of a shale shaker, whereby material from an outlet of a shale shaker is continuously deposited onto a surface which is vibrationally decoupled from the shale shaker, the method further comprising the steps of: a) obtaining a first stereoscopic image of the deposited material on the surface at a first capturing moment, and b) calculating a first material volume distribution on the basis of the first stereoscopic image.

## Description

### Technical field

The present invention concerns an improved volume measurement method and system for drill cuttings, in particular drill cuttings which have passed through a shale shaker. In this respect, the invention can be deemed to belong to the technical field of CPC classification E21B21/065.

### Background

Modern drilling involves scores of people and multiple inter-connecting activities. Obtaining real-time information about ongoing operations is of paramount importance for safe, efficient drilling. As a result, modern rigs often have thousands of sensors actively measuring numerous parameters related to rig operation, in addition to information about the down-hole drilling environment. Despite the multitude of sensors on today's rigs, a significant portion of rig activities and sensing problems remain difficult to measure with classical instrumentation, and person-in-the-loop sensing is often utilized in place of automated sensing.

By applying automated, computer-based video interpretation, continuous, robust, and accurate assessment of many different phenomena can be achieved through pre-existing video data without requiring a person-in-the-loop. Automated interpretation of video data is known as computer vision, and recent advances in computer vision technologies have led to significantly improved performance across a wide range of video-based sensing tasks. Computer vision can be used to improve safety, reduce costs and improve efficiency.

As drilling fluid is pumped into the well-bore and back up, it typically carries with it solid material known as drilling cuttings. These cuttings are typically separated from the drilling fluid on an instrument known as a shale shaker or shaker table. The process of separating the cuttings from the fluid may be difficult to monitor using classical instrumentation due to the violent nature of the shaking process. Currently the volume of cuttings is difficult to measure and typically is approximated by inaccurate tool, e.g, weight based, calliper or other impractical tools, or by human observation for volume change assessment, which requires man-power to monitor. Knowledge of the total volume and/or approximate volume of the cuttings coming off the shaker table may improve the efficiency, safety, and/or environmental impact of the drilling process.

Additionally, the location and orientation of the fluid front on the shale shaker is an important parameter to the drilling process that may be difficult to measure accurately. Currently this is somewhat difficult to measure and requires man-power to monitor. Particulate matter that is returned up the well-bore during drilling also contains a great deal of information about the lithology and/or properties of the subsurface, and can give significant insight into the behavior of the well-bore (e.g., indicating cave-ins, or failure to clean). Current drilling operations require human-in- the-loop analysis of these cuttings; a geologist has to go inspect the cuttings on a conveyor belt or other receptacle down-stream from the shale-shakers. This process is time consuming, expensive, and error prone. Classical instrumentation approaches to particle analysis are extremely difficult to design and implement - the sizes, shapes, and consistencies of cuttings prohibit most automated mechanical handling and measurement. In contrast, significant information can be obtained from visual analysis of the particles on the shaker and this information can be used to make better decisions about proper drilling parameters quickly.

US patent 10,954,729 B2 discloses a system for monitoring the volume of cuttings exiting a shaker table. The system comprises a shaker table configured to be adjusted based on information compiled by a processor and at least one camera configured to monitor said shaker table. The camera may be operably connected to the processor. The processor may be configured to identify drill cuttings and estimate the volume of the cuttings exiting the shaker table using machine vision techniques.

International patent application WO 2016/077521 A1 discloses a system and method for measuring the characteristics and volume of drill cuttings. The system comprises at least one camera operably connected to a processor for recording characteristics of drill cutting particles wherein said processor is configured to perform particle detection, extract features of said particles, or both. The processor is typically configured to initiate, interrupt or inhibit an automated activity based on the particle characteristics. The method comprises acquiring visual data from at least one camera, performing particle detection using said data, extracting feature data of any detected particles, alerting an operator and/or initiating, interrupting, or inhibiting automated activity.

The systems and methods disclosed in the above documents may be improved. More in particular, measuring the volume of the cuttings exiting the shaker is not easy and prone to inaccuracies, some of which can be attributed to the shale shaking process. The present invention aims to provide a system and method which allows better accuracy in volume measurements.

Furthermore, the systems of the prior art do not seem to be concerned with obtaining the flow rate or speed of individual cuttings and only seem to be able to obtain a general flow rate. The present invention aims to provide a manner of automatically obtaining a local flow rate, which allows to better analyze the cuttings and thereby to provide additional properties of the drill cuttings.

The present invention also aims to provide a system which can be easily applied or attached to existing shale shaker systems.

The information on the drill cuttings can be used to provide real-time information about the well-bore to the drill-team, flag unexpected changes in the particle sizes and shapes, and/or provide a long-term recording of the particle characteristics for post-drilling analyses. The information may also be used to optimize, improve, or adjust the shale-shaker angle (saving mud, and/or increasing efficiency); alert an operator to expected and/or unexpected changes in the cuttings volumes which may, in some cases, be indicative of hole cleaning, influx, losses, and/or other problems.

### Detailed description of the invention

The present invention concerns a method for measuring the volume output of a shale shaker according to claim 1 and a system for measuring the volume output of a shale shaker according to claim 12. Preferably the system is configured for measuring the volume output of a shale shaker by using the method according to the present invention. Further embodiments of the present invention are disclosed in the dependent claims and further below in the present document.

A major improvement to volumetric and local volumetric flow measurements can be achieved by implementing a vibrationally decoupled surface at the outlet of a shale shaker. The cuttings exiting from the shale shaker are deposited on this surface, where they can be better monitored by taking stereoscopic images.

The cuttings can be made to move further downstream by a number of ways. In a preferred embodiment, the surface is a tilted surface, more preferably a tilted plane surface. Alternatively, the surface is a cylindrical surface, preferably comprising a horizontal cylindrical axis. Preferably, the surface is positioned such that the cuttings can slide down the surface under the influence of gravity. Alternatively, or additionally, the surface is movable and/or is moved to allow the cuttings to move further downstream. In another embodiment, the system comprises a rotatable scoop wheel. Hereby the surface is incorporated into said scoop wheel.

A particularly preferred embodiment of the method is claimed in claim 2. This preferred embodiment allows obtaining the local volume flow rate by comparing stereoscopic images at different imaging frames. It could also allow tracking of the cuttings on an individual basis, i.e. each cutting can be tracked separately. From the individual tracking, further parameters of the drill cuttings can be derived, e.g. from the difference in shape or size at different moments, such as parameters related to friction and viscosity, which then can be related to the composition of the drill cuttings. Note that the shale shaker intends to remove drill water from the cuttings, but that some water content may still remain, which content is an important parameter to steer the shale shaker system.

In order to perform the method, the present invention also concerns a system according to claim 12.

### Overview of the figures

Figures 1 to 7 illustrate a system and method according to an embodiment of the invention as implemented on a shale shaker.

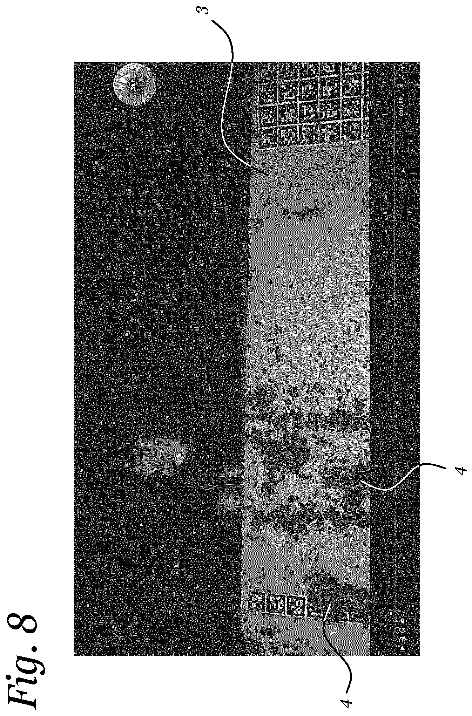

Fig. 8 illustrates the vibrationally decoupled surface in an embodiment of the invention.
Fig. 9 illustrates the results obtained using a method and/or system according to the invention.
Figs. 10 and 11 illustrate a scoop wheel which can be used in embodiments of the present invention.

### Detailed description of the invention

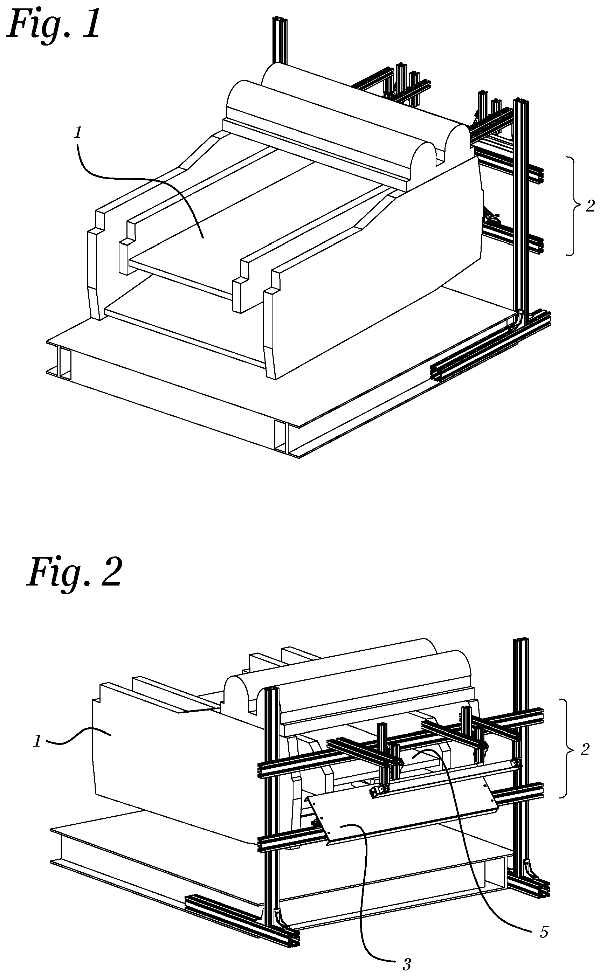

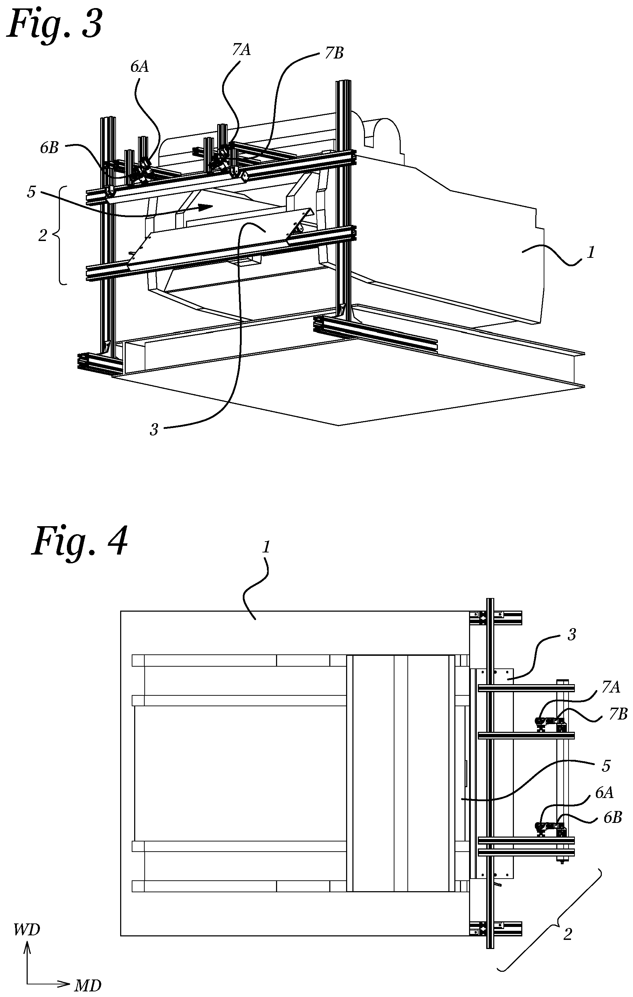

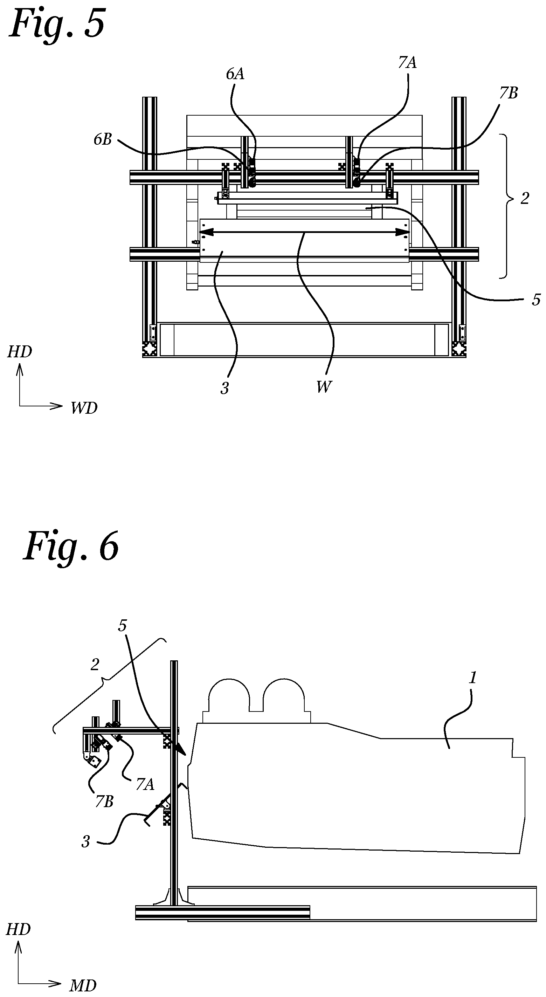

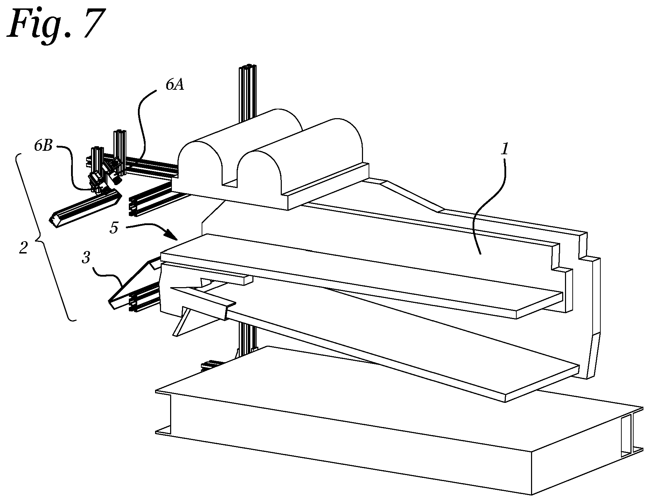

Figs. 1-7 show a shale shaker (1) implemented with a system according to the present invention, configured to perform a method according to the invention.

The present invention concerns a system (2) for measuring the volume output of a shale shaker (1). The system comprises a surface (3) onto which material (4) from an outlet (5) of a shale shaker can be continuously deposited, the surface (3) being vibrationally decoupled from the shale shaker (1).

The system also comprises at least one camera pair (6A, 6B) directed to the surface (3), each camera pair comprising two cameras (6A, 6B) and being configured to capture stereoscopic images of material (4) deposited onto the surface (3).

The system further comprises a processing unit which is operably connected to the at least one camera pair (6A, 6B) and which is configured to calculate a material volume distribution on the basis of a captured stereoscopic image.

The present invention concerns a method for measuring the volume output of a shale shaker (1), whereby material from an outlet (5) of a shale shaker is continuously deposited onto a surface (3) which is vibrationally decoupled from the shale shaker (1), the method comprising the steps of:
a) obtaining a first stereoscopic image of the deposited material on the surface at a first capturing moment, and
b) calculating a first material volume distribution on the basis of the first stereoscopic image.

Obtaining stereoscopic images can be preferably done by computer stereo vision, which can be described as the extraction of 3D information from digital images, such as those obtained by a CCD camera. By comparing information about a scene from two vantage points, and in particular obtained by the cameras of each camera pair, 3D information can be extracted by examining the relative positions of objects in the two panels. This is similar to the biological process of stereopsis.

In the system, preferably at least one camera pair is configured to capture a first stereoscopic image at a first capture moment and a second stereoscopic image at a second capture moment, and the processing unit is configured to:
- calculate a first material volume distribution on the basis of the first stereoscopic image;
- calculate a second material volume distribution on the basis of the second stereoscopic image, and to
- calculate a volume flow by comparing the second material volume distribution to the first material volume distribution, taking into account the difference in time between the first capturing moment and the second capturing moment.

The method preferably comprising the further steps of
c) obtaining a second stereoscopic image of the deposited material on the surface at a second capturing moment which is later than the first capturing moment,
d) calculating a second material volume distribution on the basis of the second stereoscopic image,
e) obtaining a volume flow by comparing the second material volume distribution to the first material volume distribution, taking into account the difference in time between the first capturing moment and the second capturing moment.

In a preferred embodiment, the volume flow is obtained by:
- obtaining an optical flow by comparing a first image or material volume distribution obtained at the first capturing moment with a second image or material volume distribution of the same camera obtained at the second capturing moment. Such an optical flow is preferably obtained on at least one camera of each stereo-camera pair. Optical flow can preferably be expressed in terms of a 2D pixel displacement to indicate, for each image pixel in the first capturing moment, how many pixels, and in which direction, the material has moved between both capturing moments.
- obtaining a material flow preferably expressed as a 3D velocity vector in meters per second. This material flow is preferably obtained by converting optical flow for each pixel into a 3D metric velocity vector, using the depth information of the first capturing moment and/or the second capturing moment, as well as the time difference between the first and second capturing moment. This conversion can be made possible by prior calibration of the camera system
- calculating the volume flow from said material flow in combination with the calculated first material volume distribution and/or the calculated second material volume distribution.

In an embodiment, the surface is movable, optionally in a controlled manner. Preferably, the surface is rotatable around a rotation axis, which is preferably perpendicular to the average flow direction of the material and which rotation axis is preferably horizontal. More preferably the surface is incorporated in a scoop wheel. Hereby, the surface preferably comprises a set of N separate sections which are essentially rotationally symmetrically provided around the rotation axis, each section comprising a scoop portion which extends outwards from the rotation axis, said scoop portion preferably eccentrically positioned with respect to the rotation axis. Hereby, preferably the scoop wheel is arranged such that material from the outlet of the shale shaker is deposited on a first section of the surface, whereby the scoop wheel is arranged to rotate such that a second section of the surface is exposed to the material from the outlet of the shale shaker when a first amount of material is deposited on the first section, said first amount being at least a minimal material amount. In a preferred embodiment, the scoop wheel is arranged to rotate under the influence of the weight of said first amount.. Furthermore, the camera pair is arranged to obtain the first stereoscopic image at the first capturing moment axis which corresponds to a moment at which the scoop wheel has turned to a position wherein the first section has moved away from the outlet of the shale shaker such that no further material is deposited onto the first section while no material that was deposited on the first section, has been removed. Preferably, N is hereby at least 2, such as 2, 3, 4, 5, 6, 7, 8, 9, 10, 11, 12 or more, still more preferably at least 4, most preferably 5 of 6.

In a preferred embodiment, the system comprises N camera pairs, whereby N is a positive integer number. N is preferably selected from 1,2, 3, 4, 5, 6, 7, 8, 9, 10 or more. Hereby, preferably N is selected in function of a width (W) of the surface (3), more preferably N is selected on the basis of the width of the surface divided by the viewing range of a camera pair in a width direction. Multiple camera pairs allow to monitor wider surfaces. Preferably multiple camera pairs are displaced with respect to one another in the width direction (WD).

In a preferred embodiment the first camera (6A, 7A) of a camera pair is displaced with respect to the second camera (6B, 7B) of the camera pair in a direction perpendicular to the width direction (WD).

Preferably the first camera (6A) and the second camera (6B) of a camera pair are displaced in the height direction (HD) and/or in the machine direction (MD).

Preferably, the volume flow is obtained by optical tracking of portions (20A, 20B) of the deposited material (4) from the first capturing moment to the second capturing moment, thereby obtaining a local volume flow.

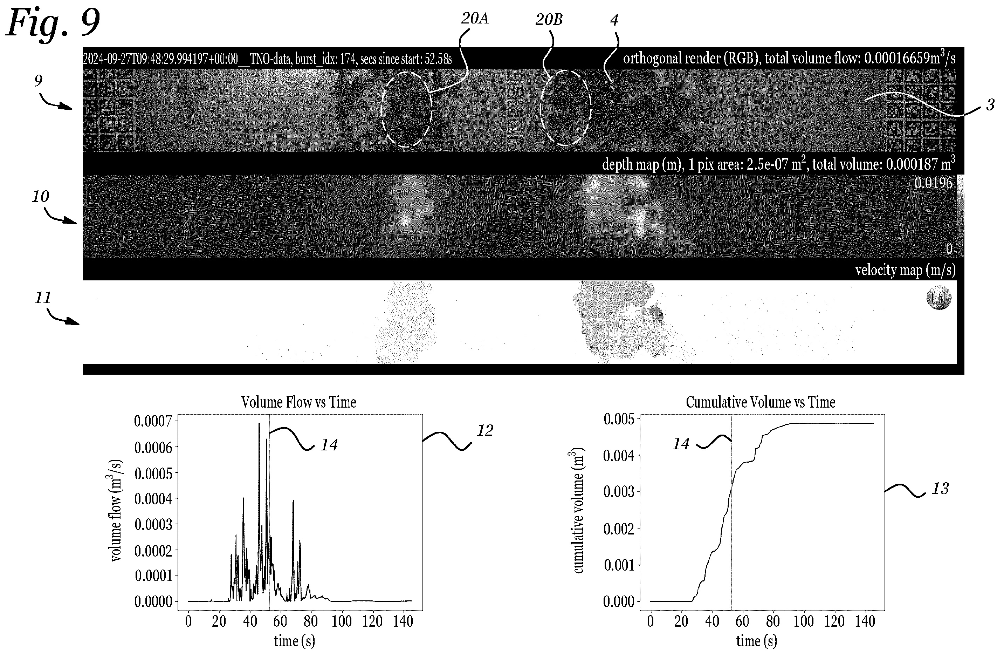

Fig. 9 shows results of the method according to the present invention. Shown at the top left (9) is a reconstructed top view on the surface (3) at a capturing moment (14). The top view can be reconstructed from the stereoscopic image obtained by the one or more camera pairs. In the present case, two camera pairs were used, and the stereoscopic images were combined along the width of the surface, from which the top view could be reconstructed.

The left center view shows a depth view, reconstructed from the stereoscopic image obtained at the same capturing moment (14). The depth view can be shown using a color coding scheme.

The left bottom view (11) shows a velocity view, reconstructed from a comparison of a stereoscopic image obtained at a first capturing moment and a stereoscopic image at a second capture moment (14) later than the first capturing moment. Note that in the present case the first capture moment can be the frame immediately preceding the second capturing moment (14). However, in some embodiments, the first capturing moment may be an earlier frame than the frame immediately preceding the second capturing moment. The velocity can be represented using a color coding scheme for indicating the movement direction, and using the intensity or darkness to represent the velocity magnitude.

The results of the volume flow in function of the time is shown in the left graph (12) to the right of the views (9, 10, 11). Hereby, the volume flow (in cubic meters per second) of deposited material (4) is calculated. In the right graph (13), the accumulated volume (in cubic meter) in time is shown, which basically relates to integration of the first graph (12).

In an embodiment, optical tracking is performed using an optical flow algorithm, which preferably is a classical computer vision algorithm such as the Gunnar-Farneback method. Alternatively, optical tracking is performed using a trained optical flow algorithm, preferably using a neural network.

In a preferred embodiment, the stereoscopic images are obtained using a neural network, which has been trained for depth perception, preferably through stereo disparity estimation.

Note that the present invention allows at least a partial training of the neural network off-site, i.e. when the system is not yet installed at the shale shaker. This can be done using testing simulations or using a shale shaker simulation apparatus, which simulates the outlet of a shale shaker. This allows at least partial training in a controlled environment.

In a preferred method, the surface is a tilted surface, more preferably a tilted plane surface, or wherein the surface is a cylindrical surface, more preferably a rotatable and/or rotating cylindrical surface. The cylindrical surface may have protrusions to aggregate material and cause the cylinder to spin under the force of gravity.

In embodiments, the surface is a static surface, preferably a tilted static surface. In this case, the cuttings can slide along the surface, resulting in a flow of cuttings across the surface. In other embodiments, the surface is a moving surface, preferably a roller surface or a conveyer surface. This allows to better control the flow of the cuttings, which may help in measuring the volume or volumetric flow rate of the deposited material.

In a preferred embodiment, the surface comprises an anti-adhesion coating. This is particularly preferred in case the surface is a tilted static surface.

In a preferred embodiment, the surface comprises a contrast colour, more preferably a single contrast colour, still more preferably a green colour. Additionally or alternatively, the surface comprises a pattern using said contrast colour, preferably a green colour. Such pattern may help in obtaining the stereoscopic images. This allows obtaining better images. Hereby, the contrast colour refers to contrasting with respect to the expected colour of the deposited material. Furthermore, a pattern may be advantageous if a neural network is being used for obtaining the stereoscopic images, which neural network has been trained for depth perception through stereo disparity estimation.

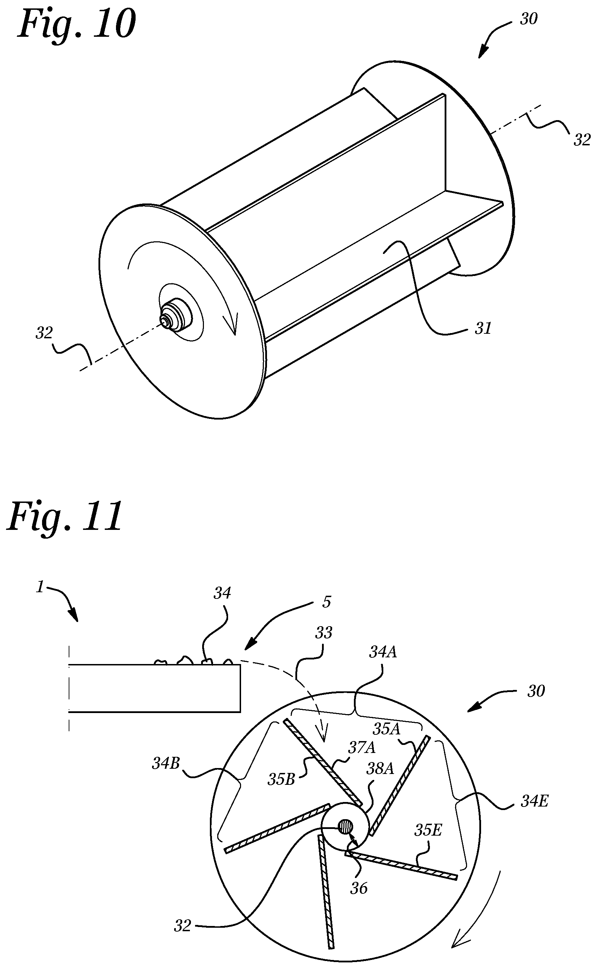

Figs. 10 and 11 illustrate a scoop wheel which can be used in embodiments of the present invention. Fig. 10 shows a perspective view, while fig. 11 illustrates a cross-sectional side view. The surface (31) of the scoop wheel (30) is rotatable around a rotation axis (32), which is preferably perpendicular to the average flow direction (33) of the material (34) and which rotation axis (32) is preferably horizontal. The surface is hereby incorporated in the scoop wheel. More particularly, the surface comprises a set of 5 separate sections, of which three are referenced in fig. 11 as (34A), (34B) and (34E). The sections are essentially rotationally symmetrically provided around the rotation axis (32), each section comprising a scoop portion (35A, 35B, 35E) which extends outwards from the rotation axis (32), said scoop portion hereby eccentrically positioned with respect to the rotation axis. The eccentricity distance may be selected depending on the particular application of the invention, but can typically between 1cm and 30cm, more preferably between 2 cm and 15cm, such as 2, 3, 4, 5, 6, 7, 8, 9, 10, 11, 12, 13, 14, 15 cm or any value there between. The scoop wheel is arranged such that material (34) from the outlet (5) of the shale shaker (1) is deposited on a first section (34A) of the surface. Note hereby that in the present example, the section (34A) is essentially defined by the scoop portion (35A) and a backside portion (37A) of the scoop portion (35B) of the next section (34B). Optionally, the section is further defined by an inner portion (38A) near the rotational axis. The scoop wheel is arranged to rotate such that a second section (34B) of the surface is exposed to the material (34) from the outlet (5) of the shale shaker when a first amount of material is deposited on the first section (34A), said first amount being at least a minimal material amount. Hereby, the scoop wheel can be arranged to rotate under the influence of the weight of said first amount. Preferably the scoop wheel can be provided with a rotational velocity sensor which is configured to obtain data indicative of the rotational velocity of the scoop wheel around the rotation axis and/or indicative of the angular position of the scoop wheel around the rotation axis, preferably with respect to a predefined reference angular position. Preferably a set of M magnets is provided in the scoop wheel, preferably at least 1 magnet per section, more preferably M=k*N, wherein k is an integer which is at least 1, whereby the system comprises a set of stationary magnetic sensors, arranged for measuring the magnetic field of the magnets which pass by the sensors. The sensors may be functionally coupled to the processing unit and arranged to provide a signal to the processing unit, which signal is indicative of the movement and/or angular position of the scoop wheel, whereby the processing unit can be preferably configured to define the first and/or second capturing moment on the basis of the signal. Hence, the camera pair can be arranged to obtain the first stereoscopic image at the first capturing moment which corresponds to a moment at which scoop wheel comprises an angular position around the rotational axis which corresponds to a moment at which the scoop wheel has turned to a position wherein the first section has moved away from the outlet of the shale shaker such that no further material is deposited onto the first section while no material that was deposited on the first section, has been removed. A major advantage of using a scoop wheel is that the volume only needs to be determined at a single moment per scoop and that no material tracking is required as the material in one scoop is separated from material in a subsequent scoop. Note that the use of a scoop wheel involves a moving mechanical component, which may not always be desirable. Hence, in some embodiments, the surface is a movable surface, such as in the case a scoop wheel is used, while in other embodiments, the surface is an immovable surface.

In embodiments using a scoop wheel, volume flow of the material can be calculated on the basis of a stereoscopic image obtained at a first capturing moment, from which a volume distribution per scoop can be calculated, in combination with a rotational velocity of the scoop wheel. Hereby, said rotational velocity may be preferably obtained using a rotational velocity sensor as discussed above. Most preferably, a rotational encoder is provided which is configured to determine a trigger moment for the obtaining an image, preferably said stereoscopic image. The processing unit can then be configured to determine the volume flow on the basis of the volume distribution per scoop in combination with the time between trigger moments. The total volume can then be obtained by accumulating the volume in each scoop. Thus, the volume per scoop and/or volume distribution per scoop, in combination with the time between trigger moments can then be used to determine the volume flow. Hereby, essentially the rotational position is determined, and, based on said rotational position, a trigger is generated. Further, based on the measured time between triggers and the measured volume, the volume flow can be determined.

In embodiments, such as described here above, the camera pair can be configured to obtain a stereoscopic image at subsequent capturing moments, each of these capturing moments corresponding to a moment at which the scoop wheel has turned to a position wherein a section has moved away from the outlet of the shale shaker such that no further material is deposited onto said section while no material that was deposited on said section, has been removed, and whereby the next capturing moment then corresponding to a moment at which the scoop wheel has turned to a position wherein the next section has moved away from the outlet of the shale shaker such that no further material is deposited onto said next section while no material that was deposited on said section, has been removed.

## Claims

1. A method for measuring the volume output of a shale shaker, whereby material from an outlet of a shale shaker is continuously deposited onto a surface which is vibrationally decoupled from the shale shaker, the method further comprising the steps of:
a) obtaining a first stereoscopic image of the deposited material on the surface at a first capturing moment, and
b) calculating a first material volume distribution on the basis of the first stereoscopic image.

2. A method according to claim 1, comprising the further steps of
c) obtaining a second stereoscopic image of the deposited material on the surface at a second capturing moment which is later than the first capturing moment,
d) calculating a second material volume distribution on the basis of the second stereoscopic image,
e) obtaining a volume flow by comparing the second material volume distribution to the first material volume distribution, taking into account the difference in time between the first capturing moment and the second capturing moment.

3. A method according to claim 2, whereby the volume flow is obtained by optical tracking of portions of the deposited material from the first capturing moment to the second capturing moment, thereby obtaining a local volume flow.

4. A method according to claim 3, wherein optical tracking is performed using an optical flow algorithm, preferably a Farneback algorithm or wherein optical tracking is performed using a trained optical flow algorithm, preferably using a neural network.

5. A method according to any of the previous claims, wherein the stereoscopic images are obtained using a neural network, preferably using a transformer architecture, which has been trained for depth perception.

6. A method according to any of the previous claims, wherein the surface is a tilted surface, more preferably a tilted plane surface, or wherein the surface is a cylindrical surface.

7. A method according to any of the previous claims, wherein the surface is a static surface, preferably a tilted static surface.

8. A method according to any of the previous claims 1 to 6, wherein the surface is a moving surface, preferably a roller surface or a conveyer surface.

9. A method according to any of the previous claims, wherein the surface comprises a anti-adhesion coating.

10. A method according to any of the previous claims, wherein the volume flow is obtained by:
∘ obtaining an optical flow by comparing a first image or material volume distribution obtained at the first capturing moment with a second image or material volume distribution of the same camera obtained at the second capturing moment, and
∘ calculating the volume flow from said optical flow in combination with the calculated first material volume distribution and/or the calculated second material volume distribution, preferably by obtaining a material flow preferably expressed as a 3D velocity vector in meters per second, whereby said material flow is preferably obtained by converting optical flow for each pixel into a 3D metric velocity vector, using the depth information of the first capturing moment and/or the second capturing moment, as well as the time difference between the first and second capturing moment.

11. A method according to any of the previous claims, wherein the surface comprises a pattern using a contrast colour, more preferably a green colour.

12. A system for measuring the volume output of a shale shaker using a method according to any of the previous claims, comprising:
- a surface onto which material from an outlet of a shale shaker can be continuously deposited, the surface being vibrationally decoupled from the shale shaker
- at least one camera pair directed to the surface, each camera pair comprising two cameras and being configured to capture stereoscopic images of material deposited onto the surface
- a processing unit which is operably connected to the at least one camera pair and which is configured to calculate a material volume distribution on the basis of a captured stereoscopic image.

13. A system according to claim 12, whereby the at least one camera pair is configured to capture a first stereoscopic image at a first capture moment and a second stereoscopic image at a second capture moment, and whereby the processing unit is configured to:
- calculate a first material volume distribution on the basis of the first stereoscopic image;
- calculate a second material volume distribution on the basis of the second stereoscopic image, and to
- calculate a volume flow by comparing the second material volume distribution to the first material volume distribution, taking into account the difference in time between the first capturing moment and the second capturing moment.

14. A system according to claim 12 or 13, comprising a rotatable scoop wheel, wherein the surface is incorporated into said scoop wheel.

15. A system according to claim 14,
- whereby the scoop wheel is provided with a rotational velocity sensor which is configured to obtain data indicative of the rotational velocity of the scoop wheel around the rotation axis and/or indicative of the angular position of the scoop wheel around the rotation axis, preferably with respect to a predefined reference angular position;
- whereby the rotational velocity sensor is functionally coupled to the processing unit and arranged to provide a signal to the processing unit, which signal is indicative of the movement and/or angular position of the scoop wheel, whereby the processing unit is configured to define the first and/or second capturing moment on the basis of said signal, and whereby the camera pair is arranged to obtain the first stereoscopic image at the first capturing moment which corresponds to a moment at which scoop wheel comprises an angular position around the rotational axis corresponding to a moment at which the scoop wheel has turned to a position wherein a first section has moved away from the outlet of the shale shaker such that no further material is deposited onto the first section while no material that was deposited on the first section, has been removed, and
- whereby volume flow of the material is calculated on the basis of a stereoscopic image obtained at a first capturing moment, from which a volume distribution per scoop can be calculated, in combination with a rotational velocity of the scoop wheel, said rotational velocity obtained using a rotational encoder which is configured to determine a trigger moment for the obtaining a stereoscopic image, whereby the processing unit is configured to determine the volume flow on the basis of the volume distribution per scoop in combination with the time between trigger moments.
